# DEMANDE DE BREVET EUROPEEN

(11) **EP 4 492 084 A1**
(43) Date de publication de la demande: **15.01.2025**
(21) Numéro de dépôt: 24186713.4
(22) Date de dépôt: 05.07.2024
(51) Int. Cl.: G01S 7/48, B61L 25/02, G01C 21/16, G01S 17/86, G01S 17/89, G01S 17/931, B61L 23/04

(54) **PROCÉDÉ DE TRAITEMENT DE DONNÉES À BORD D'UNE MACHINE ET UTILISANT UNE BASE DE DONNÉES DANS LAQUELLE SONT ENREGISTRÉES DES DONNÉES DE DÉFINITION D OBJETS CONSTITUANT DES POINTS DE REPÈRE LE LONG D'UN CHEMIN PRÉDÉTERMINÉ DE LA MACHINE, DISPOSITIF DE TRAITEMENT DE DONNÉES ET PROGRAMME INFORMATIQUE ASSOCIÉS**

(30) Priorité: 13.07.2023 FR 2307544
(71) Demandeur: GTS France, 78140 Velizy Villacoublay (FR)
(72) Inventeur: LAVIRON, Philippe, 33800 BORDEAUX (FR); ZHANG, Alex, BEIJING, 100125 (CN); YU, Jeffrey, BEIJING, 100125 (CN); ZHAO, Fiona, BEIJING, 100125 (CN); GAO, Rui, BEIJING, 100125 (CN)
(74) Mandataire: Atout PI Laplace

(57) **Abrégé**

Selon l'invention, à bord d'une machine (1) adaptée pour se déplacer sur un chemin prédéterminé (21, 22), une base de données contient des données de définition d'objets constituant des points de repère le long du chemin et associées à ses coordonnées géographiques 3D et un bloc d'acquisition (18) fournit des images de la scène devant la machine (1), ledit bloc d'acquisition comprenant un bloc de télédétection adapté pour créer une image à partir d'échos reçus et à calculer, à partir desdits échos, une direction et une distance, par rapport à la machine, dudit objet réfléchissant ; ces étapes étant répétées :
acquérir au moins une image depuis le bloc de télédétection ;
identifier dans ladite image un objet constituant un point de repère (50) en fonction des données de définition d'objets constituant des points de repère dans la base de données ;
à l'aide de l'image provenant du bloc de télédétection, déterminer une direction et une distance, par rapport à la machine (1), de l'objet constituant un point de repère identifié ;
déterminer l'emplacement 3D actuel de la machine (1) en fonction desdites direction et distance déterminées par rapport à la machine et des coordonnées géographiques 3D associées à l'objet constituant un point de repère identifié dans la base de données.

## Description

### Domaine technique :

L'invention se rapporte à une machine adaptée pour se déplacer sur au moins un chemin prédéterminé, par exemple un train, accomplissant des tâches de manière autonome, telles que la localisation ou la détection d'obstacles autonome.

### Art antérieur :

Pour une application de localisation, un odomètre à localisation discontinue est apte à accomplir une localisation autonome du train. Des repères et des balises sont utilisés pour accomplir la localisation discontinue afin de corriger l'odomètre. Toutefois, les repères et les balises sont des éléments physiques qui doivent être installés et entretenus. Les signaux GNSS ne peuvent pas être utilisés partout : les signaux GNSS ne sont pas reçus dans les tunnels, ni sur les lignes de métro dont les voies sont pour la plupart souterraines.

Pour une application de détection d'obstacles, s'il y a une incertitude quant à l'emplacement du train, une structure, par exemple un quai de gare, se trouvant très près du contour d'encombrement du train peut être considérée par erreur comme un obstacle.

Une solution qui pallie ces inconvénients est donc nécessaire.

### Résumé de l'invention :

La solution proposée par la présente invention comprend, selon un premier aspect, un procédé de traitement de données mis en oeuvre par un dispositif électronique de traitement de données à bord d'une machine adaptée pour se déplacer sur au moins un chemin prédéterminé ; ledit dispositif de traitement de données comprenant :
une base de données dans laquelle sont enregistrées des données de définition d'objets constituant des points de repère le long du chemin prédéterminé, les données de définition de chaque objet constituant un point de repère étant associées à ses coordonnées géographiques 3D ;
un bloc d'acquisition fournissant des images de la scène devant la machine, ledit bloc d'acquisition comprenant au moins un bloc de télédétection adapté pour émettre des ondes en direction du chemin s'étendant devant la machine, à recevoir des échos des ondes émises provenant d'au moins un objet réfléchissant, à créer une image à partir des échos reçus et à calculer, à partir desdites ondes et desdits échos, une direction et une distance, par rapport à la machine, dudit objet réfléchissant ;
ledit procédé comprenant les étapes suivantes, itérées :
   a/ acquérir, par le biais du bloc d'acquisition, un ensemble d'images de la scène actuelle comprenant au moins une image provenant du bloc de télédétection ;
   b/ identifier dans ladite image un objet constituant un point de repère en fonction des données de définition d'objets constituant des points de repère dans la base de données ;
   c/ à l'aide de l'image provenant du bloc de télédétection, déterminer une direction et une distance, par rapport à la machine, de l'objet constituant un point de repère identifié ;
   d/ déterminer l'emplacement 3D actuel de la machine en fonction desdites direction et distance déterminées par rapport à la machine et des coordonnées géographiques 3D associées à l'objet constituant un point de repère identifié dans la base de données.

L'invention utilise des éléments physiques existants ou des figures géométriques simples le long du chemin prédéterminé, communément la voie ferrée, et obtient un emplacement absolu à partir de ces éléments physiques.

Dans certains modes de réalisation, un tel procédé comprendra également au moins une des caractéristiques suivantes :
- sur la base d'un emplacement estimé de manière approximative de la machine, les étapes suivantes sont accomplies à l'étape b :
   déterminer, parmi les objets constituant des points de repère définis dans la base de données, un sous-ensemble des objets constituant des points de repère situés au plus à une distance seuil dudit emplacement estimé de manière approximative de la machine ;
   l'identification d'un objet constituant un point de repère étant accomplie en considérant uniquement le sous-ensemble déterminé comme comprenant l'objet constituant un point de repère à identifier, en excluant les objets constituant des points de repère non compris dans le sous-ensemble ;
- le bloc d'acquisition comprend, en outre, une caméra et l'ensemble d'images de la scène actuelle comprend une image provenant de la caméra et une image provenant du bloc de télédétection,
   l'identification de l'objet constituant un point de repère est effectuée sur l'image provenant de la caméra ; et
   une projection de l'image provenant du bloc de télédétection dans le système de référence de l'image vidéo est effectuée afin de mettre en coïncidence la représentation de l'objet constituant un point de repère identifié sur les deux images ;
   la détermination de la direction et de la distance, par rapport à la machine, de l'objet constituant un point de repère identifié est effectuée sur la base de la représentation mise en coïncidence de l'objet identifié sur l'image provenant du bloc de télédétection ;
- la machine est une machine ferroviaire et lesdits objets constituant des points de repère comprennent des objets parmi : des codes 2D (QR codes), des quais de gare, des panneaux de signalisation, des barrières anti-inondation, des figures géométriques, des signaux ;
- les objets constituant des points de repère comprennent des objets ayant chacun une forme géométrique respective associée, la base de données contenant une correspondance entre la forme géométrique et un numéro respectif, le procédé, comprenant les étapes suivantes :
   identifier des objets à forme géométrique identifiée successifs le long du chemin ;
   déduire un code de série composé des numéros successifs correspondant aux objets à forme géométrique successifs identifiés ;
   la base de données stockant des codes de série en association avec les coordonnées géographiques 3D d'au moins un des objets à forme géométrique successifs donnant lieu au code de série,, extraire de la base de données, à partir dudit code de série déduit, les coordonnées géographiques 3D d'au moins un des objets à forme géométrique successifs associés au code de série déduit ;
   la détermination de l'emplacement 3D actuel de la machine se faisant en fonction des direction et distance déterminées de l'au moins un objet à forme géométrique par rapport à la machine et des coordonnées géographiques 3D extraites ;
- le procédé comprend les étapes suivantes :
   - calculer un emplacement actuel estimé de la machine sur la base d'un emplacement 3D déterminé à l'étape d à un emplacement précédent et d'une estimation d'un déplacement de la machine entre l'emplacement précédent et l'emplacement actuel ;
   - comparer l'emplacement 3D actuel déterminé par l'étape d avec l'emplacement actuel estimé calculé ;
   - évaluer si le bloc de télédétection est fiable sur la base de ladite comparaison afin de déterminer si le capteur de télédétection fonctionne correctement ;
- l'objet constituant un point de repère identifié est un signal de circulation, et au moins une des étapes suivantes est mise en oeuvre :
   - l'identification dudit signal de circulation déclenche la transmission d'une instruction à un bloc de lecture de signaux embarqué pour qu'il lise l'aspect actuel du signal ;
   - la base de données contenant, en association avec le signal de circulation, les aspects alternatifs du signal de circulation, l'aspect actuel du signal détecté par un bloc de lecture de signaux embarqué est comparé avec lesdits aspects alternatifs du signal identifié tels qu'enregistrés dans la base de données ; et l'aspect actuel détecté est éliminé en fonction d'une comparaison de l'aspect actuel détecté avec lesdits aspects possibles.

Selon un autre aspect, l'invention porte sur un programme informatique adapté pour être enregistré dans la mémoire d'un dispositif électronique de traitement de données et comprenant, en outre, un micro-ordinateur, ledit programme informatique comprenant des instructions qui, lorsqu'elles sont exécutées sur le micro-ordinateur, entraînent la mise en oeuvre des étapes d'un procédé selon le premier aspect de l'invention.

Selon un autre aspect, l'invention porte sur un dispositif de traitement de données destiné à être placé à bord d'une machine adaptée pour se déplacer sur au moins un chemin prédéterminé ; ledit dispositif de traitement de données comprenant :
une base de données dans laquelle sont enregistrées des données de définition d'objets constituant des points de repère le long du chemin prédéterminé, les données de définition de chaque objet constituant un point de repère étant associées à ses coordonnées géographiques 3D ;
un bloc d'acquisition fournissant des images de la scène devant la machine, ledit bloc d'acquisition comprenant au moins un bloc de télédétection adapté pour émettre des ondes en direction du chemin s'étendant devant la machine, à recevoir des échos des ondes émises provenant d'au moins un objet réfléchissant, à créer une image à partir des échos reçus et à calculer, à partir desdites ondes et desdits échos, une direction et une distance, par rapport à la machine, dudit objet réfléchissant ;
dans lequel :
   le bloc d'acquisition est adapté pour acquérir un ensemble d'images de la scène actuelle comprenant au moins une image provenant du bloc de télédétection ;
   le dispositif de traitement de données étant adapté pour identifier sur ladite image un objet constituant un point de repère en fonction de données de définition d'objets constituant des points de repère dans la base de données et, à l'aide de l'image provenant du bloc de télédétection, à déterminer une direction et une distance, par rapport à la machine, de l'objet constituant un point de repère identifié ;
   le dispositif de traitement de données étant propre, en outre, à déterminer l'emplacement 3D actuel de la machine en fonction desdites direction et distance déterminées par rapport à la machine et des coordonnées géographiques 3D associées à l'objet constituant un point de repère identifié dans la base de données.

Dans certains modes de réalisation, un tel dispositif est adapté pour, sur la base d'un emplacement estimé de manière approximative de la machine et pour identifier sur ladite image un objet constituant un point de repère en fonction de données de définition d'objets constituant des points de repère dans la base de données, déterminer, parmi les objets constituant des points de repère définis dans la base de données, un sous-ensemble des objets constituant des points de repère situés au plus à une distance seuil dudit emplacement estimé de manière approximative de la machine ;

l'identification d'un objet constituant un point de repère étant mise en oeuvre par le dispositif de traitement de données en considérant uniquement le sous-ensemble déterminé comme comprenant l'objet constituant un point de repère à identifier, en excluant les objets constituant des points de repère non compris dans le sous-ensemble.

### Description succincte des dessins :

L'invention sera mieux comprise et d'autres caractéristiques, détails et avantages apparaîtront plus clairement à la lecture de la description qui suit, faite de manière non limitative, et grâce aux figures jointes, fournies à titre d'exemple.
[Fig. 1] La Figure 1 est une vue schématique du train 1 circulant sur une voie ferrée.
[Fig. 2] La Figure 2 est une vue schématique d'un dispositif de traitement dans un mode de réalisation de l'invention.
[Fig. 3] La Figure 3 représente les étapes d'un procédé de traitement de données dans un mode de réalisation de l'invention accomplissant la localisation du train.
[Fig. 4] La Figure 4 illustre le calcul de l'emplacement du train selon un mode de réalisation de l'invention.
[Fig. 5] La Figure 5 est une illustration d'un objet constituant un point de repère de type code 2D utilisé dans un mode de réalisation de l'invention.
[Fig. 6] La Figure 6 est une illustration d'un objet constituant un point de repère de type quai de gare utilisé dans un mode de réalisation de l'invention.
[Fig. 7] La Figure 7 est une illustration d'un objet constituant un point de repère de type barrière anti-inondation utilisé dans un mode de réalisation de l'invention.
[Fig. 8] La Figure 8 est une illustration d'informations d'un objet constituant un point de repère de type barrière anti-inondation utilisé dans un mode de réalisation de l'invention.
[Fig. 9] La Figure 9 est une illustration d'objets constituant des points de repère géométriques utilisés dans un mode de réalisation de l'invention.
[Fig. 10] La Figure 10 est une illustration de la détection d'objets constituant des points de repère géométrique dans un mode de réalisation de l'invention ;
La Figure 11 est une illustration de la détection d'objets constituant des points de repère géométrique dans un mode de réalisation de l'invention.

Des références identiques peuvent être utilisées dans différentes figures lorsqu'elles indiquent des éléments identiques ou comparables.

### Description détaillée :

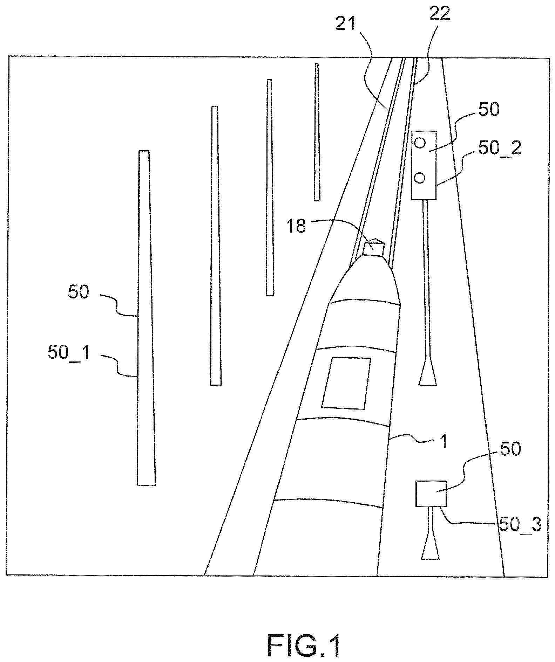

La description de l'invention est faite ci-dessous relativement à un mode de réalisation avec un train 1. Le train 1 est adapté pour circuler sur un réseau ferroviaire comprenant une pluralité de voies ferrées. La Figure 1 représente une vue schématique du train 1 circulant sur une voie ferrée comprenant les rails 21, 22. Le train 1 est conduit manuellement ou de manière autonome.

Le train 1 comprend, par exemple, une locomotive faisant face à la partie avant de la voie ferrée qui va être parcourue par le train et tirant des wagons du train.

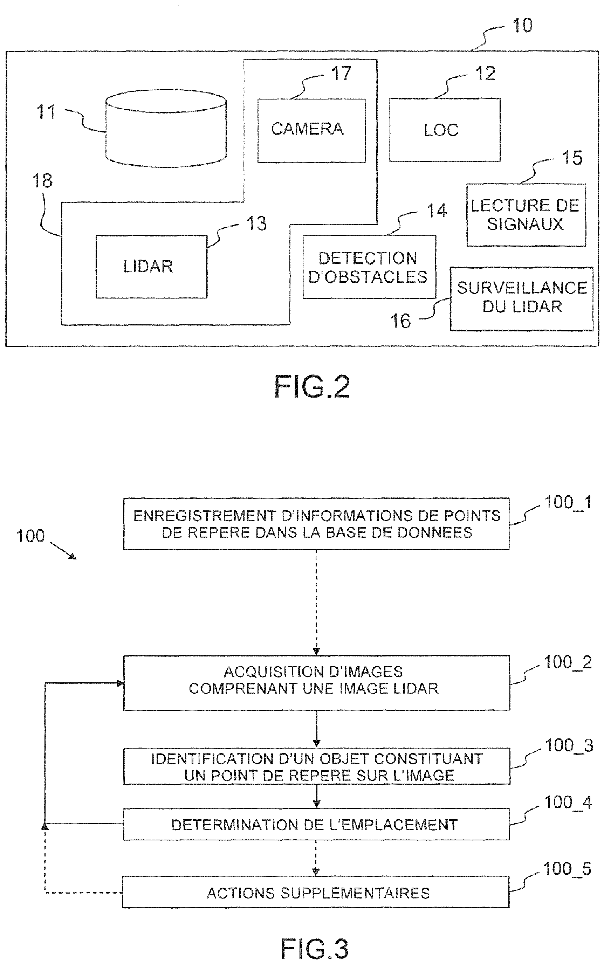

La Figure 2 représente un dispositif électronique de traitement 10 à bord du train 1. Le dispositif de traitement 10 comprend une base de données 11, un bloc de localisation 12 et un bloc d'acquisition d'images 18 comprenant un bloc lidar 13.

Le bloc de localisation 12 est adapté pour déterminer l'emplacement du train 1 chaque intervalle temporel de durée T1 (par exemple T1 est compris dans la plage allant de 50 à 500 ms). Le bloc de localisation 12 fournit, par exemple, l'emplacement absolu du train 1 sur Terre, par exemple ses coordonnées 3D absolues.

Le bloc lidar (de l'anglais « Laser Imaging Détection and Ranging ») 13 est installé sur l'avant de la locomotive du train, et fait face à la partie de la voie ferrée en avant du train 1, comme illustré sur la Figure 3.

Le bloc lidar 13, comme cela est connu, comprend au moins une source laser adaptée pour émettre des impulsions laser et comprend des capteurs. Des impulsions laser émises, lorsqu'elles rencontrent des objets, sont réfléchies par ces objets : certains de ces échos sont reçus par le bloc lidar 13 et captés par les capteurs. Sur la base des échos reçus mesurés par les capteurs, le bloc lidar 13 est adapté pour mesurer le temps de parcours des échos laser et à calculer la distance de la source à chaque objet réfléchissant et également la direction de cet objet par rapport à un axe de référence, par exemple l'axe longitudinal de la locomotive du train. Une image 3D des objets dans le champ de vision du bloc lidar 13 peut ainsi être obtenue selon un intervalle T2 (par exemple T2 est compris dans la plage allant de 50 à 500 ms).

La source laser est installée - et l'émission du lidar est réglée - de telle sorte que le champ de vision du lidar couvre tous les objets à détecter le long de la voie ferrée et qui se trouvent à proximité de la voie ferrée sans intrusion.

La vitesse de balayage du bloc lidar 13 influe sur le nombre de points et les échos qui sont mesurés. Le choix de l'optique et du scanner a une forte influence sur la résolution et la portée du système lidar. La portée du lidar est la longueur de la zone devant le train qui peut être surveillée par le biais des ondes laser.

Dans un mode de réalisation, la base de données 11 contient des données révélant la topologie du réseau ferroviaire, permettant de connaître les coordonnées 3D de chaque point de la voie ferrée ou au moins une approximation précise.

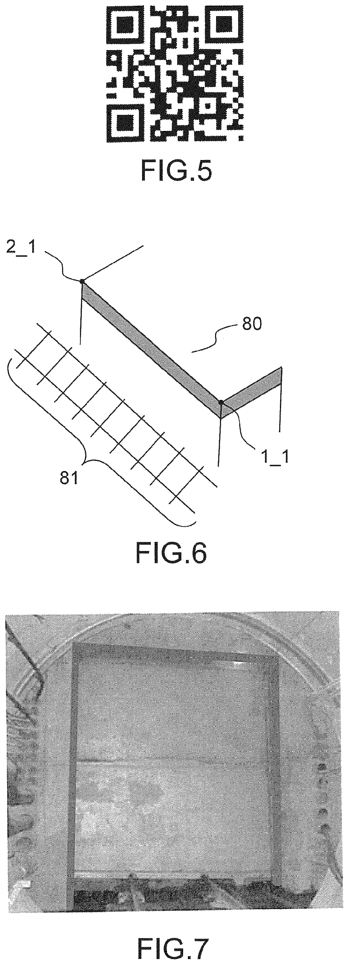

Par exemple, chaque voie ferrée étant représentée par l'axe médian entre les rails droit et de liaison de la voie ferrée :
- l'axe médian ayant été segmenté en portions successives, chaque portion a été modélisée par un segment ; la succession de segments est enregistrée dans la base de données, par exemple par chaînage de leur identifiant, la forme et les coordonnées géographiques 3D d'extrémité sont connues et enregistrées dans la base de données 11 ; et/ou
- la base de données 11 contient les coordonnées 3D d'un ensemble de points le long de l'axe médian, la succession de ces points étant indiquée dans la base de données 11, par exemple par chaînage de leur identifiant, et la distance entre chaque point et le point suivant étant égale ou inférieure à une distance prédéterminée d ; par exemple, d est comprise dans la plage allant de 0 à 5000 m ; d est, par exemple, choisie de sorte qu'elle est égale à 1 mètre (m) ; par exemple, ce mode de réalisation est considéré ci-après : la Figure 6 illustre, dans un plan P donné perpendiculaire à un plan de la voie ferrée, le point 20 dans l'axe médian entre le rail 21 et le rail 22 de la voie ferrée.

La base de données 11 contient également des données définissant des objets constituant des points de repère qui sont présents le long de la voie ferrée. Ces objets constituant des points de repère sont des objets physiques qui sont adaptés au lidar, c'est-à-dire propres à réfléchir des ondes lidar incidentes. Des exemples de types d'objets constituant des points de repère sont : un élément de signalisation (avec des feux de circulation), par exemple 50_2 en référence à la Figure 1 ; des pylônes, par exemple 50_1 ; des pancartes kilométriques telles que 50_3, qui indiquent un nombre de kilomètres séparant la pancarte kilométrique d'un point de référence ; des barrières anti-inondation ; des supports avec des codes 2D ; des quais de gare ; des panneaux de signalisation, y compris des panneaux de point milliaire et autres indicateurs ; des éléments ayant des figures géométriques typiques.

La base de données 11 contient, pour chaque objet constituant un point de repère défini, son type, son identifiant, ses coordonnées, d'autres attributs tels que des informations de liaison de point de repère, une direction dans laquelle le point de repère peut être détecté, un contenu pouvant être lu au niveau du point de repère, etc.

Dans un mode de réalisation, des attributs caractéristiques des objets constituant des points de repère sont enregistrés : les coordonnées 3D des sommets des objets dans un système de référence géographique global lié à la Terre (par exemple une latitude et une longitude), permettant aux objets constituant des points de repère d'être reconnus, et donc identifiés, en fonction des échos lidar reçus.

La Figure 3 représente les étapes d'un procédé de traitement de données 100 dans un mode de réalisation de l'invention accomplissant la localisation du train.

Dans une étape préliminaire 100_1, les données de définition, incluant les coordonnées géographiques 3D du ou des points caractéristiques des objets constituant des points de repère 50 le long de la voie ferrée entière (du point de départ au point de destination finale) sont déterminées et sont enregistrées dans la base de données 11.

Par exemple, les objets constituant des points de repère peuvent être modélisés par des volumes géométriques 3D standards et/ou des surfaces associées à des paramètres géométriques incluant leurs dimensions caractéristiques et les coordonnées (par exemple obtenues par le biais d'un récepteur GNSS ou en utilisant la topographie mobile associée à une centrale inertielle) des sommets caractéristiques de la forme de modélisation.

### Localisation

L'emplacement exact du train n'est pas connu.

Dans le mode de fonctionnement du dispositif de traitement 100, à l'étape 100_2, au moins une image lidar est acquise selon un intervalle T2.

Au cours d'une étape 100_3, après chaque intervalle T1, le bloc de localisation 12 analyse une image d'un ensemble d'images comprenant au moins la dernière image lidar acquise, ladite image étant, dans un mode de réalisation, la dernière image lidar acquise, et détermine un ou plusieurs sous-ensembles de points dans l'image correspondant à un ou plusieurs objets respectifs qui sont des sources d'échos. Sur la base au moins dudit sous-ensemble de points sur ladite image comparé avec des informations d'objets constituant des points de repère (sommets caractéristiques, dimensions ...), le bloc de localisation 12 recherche l'objet constituant un point de repère dans la base de données 11, le trouve et détermine tous les identifiants possibles de ce point de repère représenté sur l'image, étant donné que les points de repère peuvent être presque identiques. Le train se déplace ensuite jusqu'au point de repère suivant. Sur la base de la détection et de la distance jusqu'au premier point de repère, les identifiants du point de repère sont filtrés plus avant. Ce procédé continue jusqu'à ce qu'un unique point de repère puisse être identifié. L'emplacement du train est alors déterminé sur la base de ce point de repère. Aux points où les trains font souvent un démarrage à froid, des points de repère avec un contenu pouvant être lu peuvent être installés, par exemple un code 2D. Dans ce cas, l'identifiant du premier point de repère détecté peut être lu et l'emplacement peut être déterminé.

Dans un mode de réalisation, sur la base du dernier emplacement déterminé avec la répétition du procédé précédent, et en sachant une vitesse maximale/minimale (fixée ou déterminée à partir d'une vitesse estimée de manière approximative), un sous-ensemble des objets constituant des points de repère situés au plus/au moins à une première distance seuil (égale à la vitesse maximale/minimale multipliée par T1) dudit dernier emplacement du train est extrait de la base de données 11, et l'étape d'identification est effectuée en comparant l'objet constituant un point de repère sur l'image uniquement audit sous-ensemble (et pas aux objets constituant des points de repère non compris dans le sous-ensemble) afin d'identifier ledit objet constituant un point de repère.

Dans un autre mode de réalisation, le bloc de localisation 12 est adapté pour effectuer, parallèlement au procédé 100, une estimation approximative de l'emplacement actuel du train (par exemple au moyen d'un odomètre ou d'une centrale inertielle) et, en connaissant une erreur maximale d'emplacement associée à cette estimation, un sous-ensemble des objets constituant des points de repère situés au plus à une seconde distance seuil dudit dernier emplacement du train est extrait de la base de données 11, et l'étape d'identification est réalisée en comparant l'objet constituant un point de repère sur l'image uniquement audit sous-ensemble (et pas aux objets constituant des points de repère non compris dans le sous-ensemble) afin d'identifier ledit objet constituant un point de repère.

Une fois qu'un objet constituant un point de repère a été identifié sur l'image lidar, au cours d'une étape 100_4, le bloc de localisation 12 détermine, à partir des informations lidar associées à cet objet constituant un point de repère, la distance et la direction relatives de l'objet identifié par rapport au train.

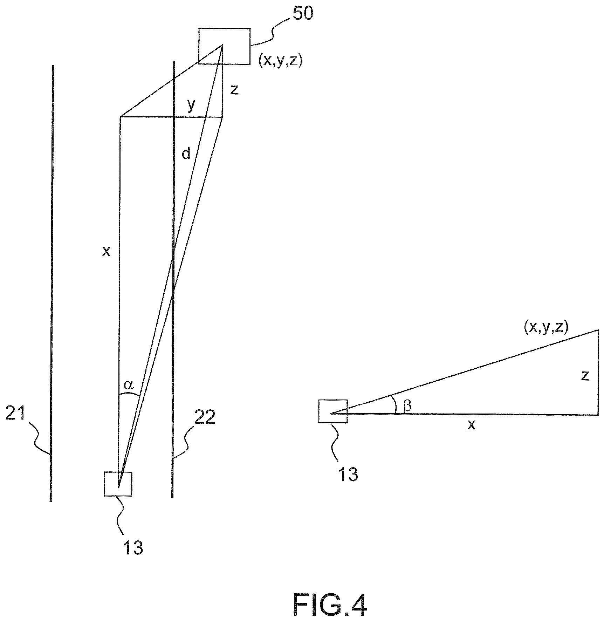

Par exemple, en référence à la Figure 4, en considérant l'objet constituant un point de repère identifié 50, la distance d et les angles α et β (par rapport à l'axe médian entre les rails 21, 22 de la voie ferrée) sont déterminés.

En outre, le bloc de localisation 12 extrait de la base de données 11 les coordonnées 3D de l'objet constituant un point de repère identifié 50. En référence à la Figure 4, ces coordonnées sont (x, y, z). Et, à partir de ces coordonnées extraites combinées avec la distance et les angles de direction relatifs, l'emplacement discret et absolu du train, exprimé en coordonnées 3D, est calculé.

Dans un mode de réalisation, le dispositif de traitement 10 comprend, en outre, une caméra vidéo 17 placée sur la face avant du train 1, par exemple avec (approximativement) le même axe médian de champ de vision que le lidar 13. La caméra vidéo 17 est adaptée pour acquérir des images périodiques de la scène en avant du train 1. Il est plus facile d'utiliser une caméra pour distinguer le type des objets détectés, en employant des modèles de détection déjà très développés par le biais de l'intelligence artificielle.

Dans un tel mode de réalisation, à l'étape 100_2, la caméra vidéo acquiert une image vidéo chaque intervalle temporel de durée T3, qui est ajoutée à l'ensemble actuel d'images. Et à l'étape 100_3, par exemple, l'identification d'objets constituant des points de repère est accomplie sur l'image vidéo. Et, afin de garantir que l'objet constituant un point de repère considéré sur l'image lidar à l'étape 100_4 est le même que l'objet constituant un point de repère identifié sur l'image vidéo, une transformation géométrique de l'image lidar 3D de l'ensemble d'images est effectuée pour produire une image vidéo 2D ; et une mise en coïncidence de points d'image de l'objet constituant un point de repère identifié est ensuite effectuée, de l'image vidéo vers l'image lidar 3D transformée, ceci indiquant les points lidar à considérer pour obtenir les informations de distance et de direction.

Dans certains modes de réalisation, les codes 2D sont encadrés avec des matériaux présentant une forte réflectivité pour être mieux détectés par le lidar.

La base de données 11 comprend les informations suivantes pour l'objet sous forme de code 2D, en référence à la Figure 5 :
- identifiant du code 2D,
- coordonnées géographiques 3D du point central du code 2D,
- informations de liaison.

Le code 2D lui-même contient les mêmes informations.

Le bloc lidar 13 peut identifier un objet de type code 2D en détectant, sur les images lidar, les 4 sommets du code 2D, puis en déterminant le point central à partir desdits sommets à l'aide d'algorithmes déterministes.

Le contenu du code 2D peut être lu par le bloc caméra 17. En recherchant dans la base de données 11, l'identifiant et l'emplacement du code 2D peuvent être déterminés, de telle sorte que l'emplacement du train peut être calculé à partir de l'emplacement absolu du code 2D et de la distance par rapport au lidar.

En référence à la Figure 6, tout quai de gare 80 est défini par les sommets clés 1_1 et 2_1 (c'est-à-dire les sommets d'extrémité supérieure le long de la voie ferrée) et le segment de voie ferrée correspondant. Par conséquent, les informations des objets constituant des points de repère du type quai de gare enregistrées dans la base de données 11 comprennent, dans un mode de réalisation :
- identifiant du quai de gare,
- identifiant du segment de voie ferrée,
- coordonnées géographiques 3D du sommet 1_1,
- coordonnées géographiques 3D du sommet 2_1.

Les quais de gare peuvent être détectés par le bloc lidar 13 à l'aide d'algorithmes déterministes, de telle sorte que les deux sommets puissent être identifiés à l'étape 100_3. Avec l'emplacement absolu des deux sommets provenant de la base de données 11, l'emplacement du train peut être calculé.

Un panneau de signalisation peut être une pancarte kilométrique, un panneau de limite de vitesse ou tout autre panneau le long de la voie ferrée composé d'un matériau à forte réflectivité. La base de données 11 comprend les informations suivantes pour les objets constituant des points de repère de type panneau de signalisation :
- identifiant du panneau de signalisation,
- coordonnées géographiques 3D du point central du panneau de signalisation.

Les panneaux de signalisation peuvent être détectés par le lidar à l'aide d'algorithmes déterministes en détectant les sommets afin d'identifier le point central. L'emplacement du train peut être calculé à partir de l'emplacement absolu du panneau de signalisation et de la distance par rapport au lidar.

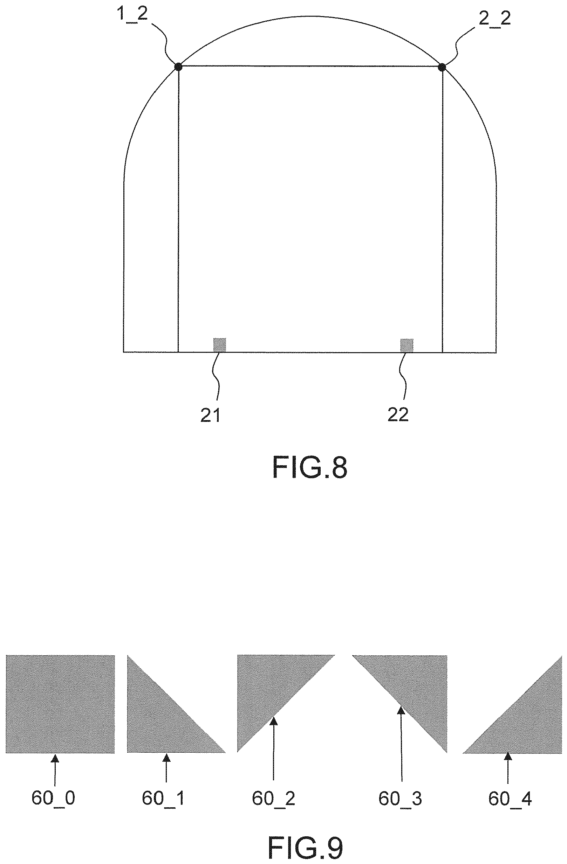

Les barrières anti-inondation sont des moyens communément employés pour empêcher de l'eau de s'écouler dans une gare. La Figure 7 représente une barrière anti-inondation et la Figure 8 illustre les caractéristiques considérées de la barrière anti-inondation de la Figure 7 interprétée comme un rectangle. Les deux sommets extrêmes supérieurs sont définis comme 1_2 et 2_2. Les deux côtés de la barrière anti-inondation sont considérés comme deux points de repère avec des coordonnées différentes des sommets, distingués par la direction dans laquelle la barrière anti-inondation est détectée.

Les informations dans la base de données 11 pour les objets de type barrière anti-inondation comprennent :
- identifiant de la barrière anti-inondation,
- identifiant du segment de voie ferrée,
- direction dans laquelle elle est détectée,
- coordonnées géographiques 3D du sommet 1_2,
- coordonnées géographiques 3D du sommet 2_2.

Les barrières anti-inondation peuvent être détectées par le lidar à l'aide d'algorithmes déterministes, de telle sorte que les deux sommets 1_2, 2_2 puissent être identifiés. Avec l'emplacement absolu des deux sommets provenant de la base de données 11, l'emplacement du train peut être calculé. Avec cette information, la barrière anti-inondation détectée ne sera pas considérée comme un obstacle faisant intrusion dans le contour d'encombrement du train. La détection de barrières anti-inondation peut également surveiller le comportement du lidar.

Les objets sous forme de figures géométriques ne sont pas des points de repère naturels, ils doivent être installés.

Des objets sous la forme de rectangles et triangles isocèles rectangles avec des directions différentes peuvent être lesdits objets sous forme de figures géométriques considérés.

Chaque figure peut représenter un numéro : par exemple de 0 à 4 lorsque 5 figures géométriques sont utilisées.

En référence à la figure 9, la figure 60_i, 1 = 0 à 4, correspond au numéro i.

Suite à la détection de l'objet géométrique par le lidar 13, le numéro correspondant est déduit par le bloc de localisation 12 (la correspondance entre chaque figure géométrique et son numéro correspondant a été stockée préalablement dans la base de donnée 11).

Une série de figures successivement détectées par le bloc de localisation 12 forme un identifiant.

Les informations dans la base de données 11 pour une série de figures géométriques comprennent l'identifiant de la série, associé aux coordonnées géographiques 3D de chaque objet constituant une figure de la série (ou d'au moins un des objets, par exemple celui correspondant au dernier objet rencontré dans une direction fixée).

La série des numéros cpnstitue un code série. Il peut être considérée comme un nombre quinaire dont chaque objet représente un nombre, de 0 à 4, comme chiffre du code quinaire. Si un objet est utilisé, il peut représenter 5 identifiants de longueur 1, et si, par exemple, une séquence de 10 objets est utilisés, elle peut représenter 9765625 (5^10) identifiants de longueur 10. Ces identifiants sont indiqués en séquence par la voie et la position des objets est dans la base de données. Une fois la série complète détectée, l'identifiant est obtenu, qui est un index dans la base de données qui permet de retrouver la géolocalisation des objets ayant donné lieu à la séquence. Ainsi, à partir de cette géolocalisation, la position du train peut être calculée.

Par exemple, si le train croise successivement sur sa trajectoire :
- un objet portant la figure géométrique du type 60_1, puis
- un objet portant la figure géométrique du type 60_3, puis
- un objet portant la figure géométrique du type 60_1, puis
- un objet portant la figure géométrique du type 60_1, puis
- un objet portant la figure géométrique du type 60_3, puis
- un objet portant la figure géométrique du type 60_0,
le bloc de localisation 12 en déduit l'identifiant « 131130 », puis il cherche dans la base de données 11 les informations de géolocalisation stockées en correspondance avec cet identifiant : par exemple ces informations comprennent les coordonnées 3D de chacun desdits objets rencontrés (ou alors les coordonnées 3D d'un de ces objets, par exemple le dernier objet rencontré : ici l'objet détecté portant la figure 60_0).

Dans ce cas, le lidar est donc utilisé pour détecter le type de figure, d'où sera déduit le numéro correspondant. Par exemple :

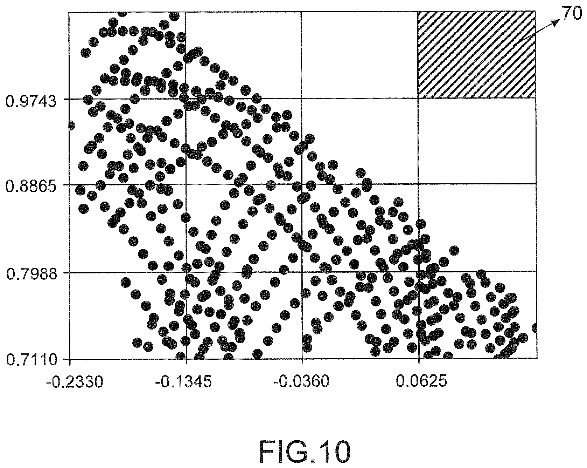

Une figure géométrique apparaît sur l'image de nuage de points lidar représentée sur la Figure 10. Dans un mode de réalisation, le nuage de points lidar est divisé en X (ici, X = 16) morceaux identiques, tels que le morceau hachuré 70. Seuls les quatre morceaux aux quatre sommets de la forme détectée sont utilisés pour les points réfléchis. La direction du triangle peut être déterminée si seulement trois sommets sont détectés sur la base de la position relative des trois sommets, et donc le numéro correspondant 0, 1, 2, 3, ou 4. Si les quatre morceaux comportent tous des points réfléchis, on peut déterminer qu'il s'agit d'un rectangle.

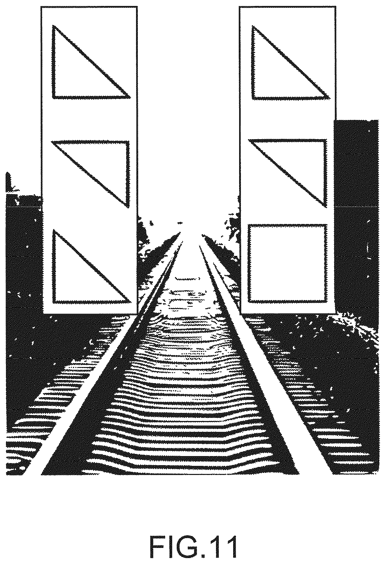

Dans des modes de réalisation distincts, les objets géométriques, par exemple du type 60_i représentés en figure 9, sont disposés l'un après l'autre le long de la voie ou encore ils peuvent être groupés, comme représenté en figure 11, dans deux exemples d'une série d'objets géométriques « codant » tous deux l'identifiant « 131130 » (si la convention retenue, lorsqu'ils sont groupés, est que la lecture se fait de haut en bas en débutant à gauche, puis de haut en bas à droite).

Des signaux et leur aspect (lumière verte dans une première position du signal lumineux, lumière rouge dans une seconde position du signal lumineux) peuvent être détectés par la caméra 17. Un signal est associé à l'un quelconque des points de repère (avec un vecteur de distance spécial fixe entre eux, par exemple de 0 ou différent de 0) qui peut également être détecté uniquement par le lidar en détectant le point de repère à l'aide d'algorithmes déterministes.

Les informations pour les signaux dans la base de données seront :
- identifiant du signal,
- identifiant du point de repère associé (le cas échéant), le signal peut être associé à un point de repère qui peut être détecté par le lidar à l'aide d'algorithmes déterministes, pour donner une distance précise du signal,
- informations de différence spatiale (coordonnées du vecteur entre le signal et le point de repère associé), par détection et mesure de distance du point de repère avec le lidar, la distance du signal peut être déterminée,
- identifiant du segment de voie ferrée,
- emplacement du signal, pour déterminer l'emplacement du train afin d'effectuer une vérification avec l'emplacement calculé à partir de la mesure de distance du lidar, pour améliorer le niveau de sécurité
- aspect possible du signal, l'aspect du signal est détecté par intelligence artificielle, et cette information donne une portée du résultat de détection pour améliorer l'intégrité de l'algorithme d'intelligence artificielle,
- informations de liaison du signal (pour donner des informations concernant les prochains signaux à détecter).

L'ensemble d'étapes 100_2 à 100_4 est répété chaque intervalle temporel T.

Dans le mode de réalisation considéré, des actions supplémentaires 100_5 sont effectuées de manière facultative. Par exemple, sur la base de l'emplacement déterminé ou sur la base d'une vitesse du train estimée au moins sur la base de l'emplacement déterminé, une action d'urgence est déclenchée, par exemple un freinage d'urgence. Dans certains modes de réalisation, les actions supplémentaires 100_5 sont liées à la détection d'obstacles et/ou à l'assistance à la fonction de lecture de signaux et/ou à la surveillance du comportement du lidar, comme décrit ci-dessous.

### Détection d'obstacles

Dans un mode de réalisation, le dispositif de traitement 10 comprend un bloc de détection d'obstacles 14 adapté pour détecter des obstacles autour du train 1 et à déclencher, sur la base d'une telle détection, des actions d'urgence telles qu'un freinage d'urgence.

La détection d'obstacles est effectuée, par exemple, en utilisant les images lidar et/ou en utilisant les images vidéo.

Dans un mode de réalisation, l'invention comprend la comparaison de l'estimation d'obstacles avec la situation réelle sur place définie par les informations de point de repère enregistrées dans la base de données 11.

Par exemple, à l'étape 100_5, en utilisant les informations de point de repère dans la base de données 11, la détection d'obstacles élimine, parmi les obstacles détectés, les objets constituant des points de repère situés en avant qui auraient été détectés, de manière erronée, comme des obstacles en raison du fait qu'ils se trouvent très près du train ou en raison d'une incertitude quant à l'emplacement du train ou du fait d'erreurs de capteurs. Les étapes seraient, par exemple :
- Au cours du procédé de détection d'obstacles, il existe une légère erreur relativement à l'emplacement du train et/ou l'orientation du capteur. L'erreur s'accroît à longue distance.
- Une recherche est effectuée dans la base de données 11 pour l'emplacement de l'obstacle afin de déterminer s'il existe un quai ou une barrière anti-inondation, ou toute autre chose définie dans la base de données 11 à proximité de la voie ferrée.
- Si ce n'est pas le cas, le module de détection d'obstacles sait qu'il s'agit d'un obstacle et non d'un objet quelconque situé à proximité de la voie ferrée mais hors du contour d'encombrement du train.
- Si c'est le cas, cet obstacle est marqué comme une fausse alerte potentielle à traiter ultérieurement par le module de détection d'obstacles, par ex. à déterminer à un emplacement plus proche de l'obstacle.

Ainsi, même si des quais de gare ou des barrières anti-inondation sont situés très près de la voie ferrée et peuvent donc aisément être détectés, de manière erronée, comme des obstacles, ils ne seront pas considérés comme des obstacles.

### Assistance à la fonction de lecture de signaux

Un signal est également un point de repère. Dans un mode de réalisation, le dispositif de traitement 10 comprend un bloc de lecture de signaux 15 adapté pour identifier le signal fourni par un équipement de signalisation de circulation tel que 50_2, par exemple par la détermination de l'emplacement et de la couleur de la lumière émise par traitement d'image sur une image vidéo fournie par le bloc caméra 17.

Les informations de point de repère du signal dans la base de données 11, par ex. l'emplacement, les aspects possibles, peuvent permettre de réduire la charge computationnelle, par ex. la détection du signal est uniquement effectuée à partir d'un emplacement situé à moins d'une certaine distance du signal (en fonction de la portée de détection, par exemple 200 m) puisque l'emplacement du signal est connu à partir de la base de données 11, et à titre de référence de vérification de concordance pour améliorer l'intégrité, tandis que, sans cette information, l'algorithme dans le bloc de lecture de signaux 15 aurait à rechercher constamment des signaux à détecter, ce qui consomme une puissance de calcul considérable. Si l'aspect d'un signal est lu, la vision par ordinateur doit identifier la couleur du signal (il peut y avoir de la lumière polarisée entraînant une lecture erronée de la couleur). Les informations de point de repère du signal fournissent une référence (aspects possibles) pour vérifier le résultat de la lecture, par exemple si l'aspect du signal est détecté comme un aspect non inclus dans la liste des aspects possibles, on sait que la détection est erronée.

À l'étape 100_5, les étapes accomplies sont, par exemple :
- combinaison des données lidar et des données de caméra, pour identifier, sur l'image de caméra, le signal que le lidar détecte,
- identification de l'aspect du signal à partir de l'image de caméra,
- recherche dans la base de données 11 pour déterminer si l'aspect de signal identifié est possible, si c'est le cas, cet aspect peut être utilisé et, si ce n'est pas le cas, le résultat d'identification est éliminé.

### Surveillance du comportement du lidar

Dans un mode de réalisation, le dispositif de traitement 10 comprend un bloc de surveillance de lidar 16 adapté pour surveiller le comportement du bloc lidar 13, par comparaison des points de repère détectés dans les images lidar et des points de repère dans la base de données 11.

À l'étape 100_5, les étapes accomplies sont, par exemple :
- recherche dans la base de données 11 des points de repère situés dans le champ visuel en avant,
- utilisation d'emplacements précédents précis et de données d'odométrie, y compris d'erreurs d'odométrie, pour calculer l'emplacement actuel estimé du train avec une marge d'erreur,
- si le point de repère dans la base de données 11 est correctement détecté et l'emplacement du train calculé à partir de ce point de repère est compris dans les limites de tolérance d'emplacement résultant des données d'odométrie, il est considéré que le lidar fonctionne correctement,
- dans le cas contraire, le résultat de détection du lidar n'est pas fiable.

Dans certains modes de réalisation, le module de traitement 10 accomplit seulement un ou plusieurs des procédés mentionnés utilisant des points de repère dans la base de données 11 parmi localisation, détection d'obstacles, assistance à la fonction de lecture de signaux et surveillance du comportement du lidar.

Dans un mode de réalisation, le dispositif de traitement 10 comprend un microprocesseur et une mémoire comprenant des instructions qui, lorsqu'elles sont exécutées par le microprocesseur, entraînent l'accomplissement d'une ou de plusieurs des étapes 100_1 à 100_5. En variante, au moins certaines des étapes peuvent être accomplies par un matériel spécialisé, communément un circuit intégré numérique, soit spécifique (ASIC), soit basé sur une logique programmable (par ex. FPGA).

En raison des restrictions de performances des lidars, plus le champ de vision (FoV) est large, plus la densité de points est faible. Par conséquent, il peut ne pas être possible de trouver un lidar qui couvre à la fois la distance et la largeur. On peut donc utiliser de multiples lidars. Dans un mode de réalisation, au moins deux lidars sont utilisés, au lieu d'un seul, respectivement pour la longue distance (champ de vision FoV1) et la courte distance (champ de vision FoV2) afin de couvrir la distance totale, comme illustré sur la Figure 4. Les avantages comprennent le fait que la largeur et la distance sont toutes les deux couvertes et que l'espace de superposition des FoV peut faire l'objet de détections avec les deux/tous les lidars de façon à avoir des chaînes de détection indépendantes pour faciliter la démonstration du niveau de sécurité.

Bien entendu, de nombreux objets constituant des points de repère peuvent être pris en compte dans la base de données 11, détectés par lidar (et la caméra lorsqu'une caméra 17 est également utilisée).

L'invention a été divulguée ci-dessus avec l'utilisation d'un bloc lidar. D'autres technologies peuvent être utilisées à la place du lidar, par exemple la technologie de radar ou de sonar, ou toute technologie appropriée utilisant la détection d'échos d'ondes générées à bord du train.

L'invention a été divulguée ci-dessus relativement à un train, mais elle peut être utilisée plus généralement avec toute machine adaptée pour se déplacer le long d'une trajectoire quelconque parmi un ensemble de trajectoires connues, une telle machine étant, par exemple, un métro, un tramway, un bateau, un avion, un drone, avec ou sans conduite automatique et autonome.

## Revendications

1. Procédé de traitement de données accompli par un dispositif électronique de traitement de données (10) à bord d'une machine (1) adaptée pour se déplacer sur au moins un chemin prédéterminé (21, 22) ; ledit dispositif de traitement de données comprenant :
une base de données (11) dans laquelle sont enregistrées des données de définition d'objets constituant des points de repère le long du chemin prédéterminé, les données de définition de chaque objet constituant un point de repère étant associées à ses coordonnées géographiques 3D ;
un bloc d'acquisition (18) fournissant des images de la scène devant la machine (1), ledit bloc d'acquisition comprenant au moins un bloc de télédétection (13) adapté pour émettre des ondes en direction du chemin s'étendant devant la machine, à recevoir des échos des ondes émises provenant d'au moins un objet réfléchissant, à créer une image à partir des échos reçus et à calculer, à partir desdites ondes et desdits échos, une direction et une distance, par rapport à la machine, dudit objet réfléchissant ;
ledit procédé comprenant les étapes répétées suivantes :
- a/ acquérir, par le biais du bloc d'acquisition (18), un ensemble d'images de la scène actuelle comprenant au moins une image provenant du bloc de télédétection (13) ;
- b/ identifier dans ladite image un objet constituant un point de repère (50) en fonction des données de définition d'objets constituant des points de repère dans la base de données (11) ;
- c/ à l'aide de l'image provenant du bloc de télédétection (13), déterminer une direction et une distance, par rapport à la machine (1), de l'objet constituant un point de repère identifié ;
- d/ déterminer l'emplacement 3D actuel de la machine (1) en fonction desdites direction et distance déterminées par rapport à la machine et des coordonnées géographiques 3D associées à l'objet constituant un point de repère identifié dans la base de données (11).

2. Procédé selon la revendication 1, dans lequel, sur la base d'un emplacement estimé de manière approximative de la machine (1), les étapes suivantes sont accomplies à l'étape b :
- déterminer, parmi les objets constituant des points de repère (50) définis dans la base de données (11), un sous-ensemble des objets constituant des points de repère situés au plus à une distance seuil dudit emplacement estimé de manière approximative de la machine (1) ;
- l'identification d'un objet constituant un point de repère (50) étant accomplie en considérant uniquement le sous-ensemble déterminé comme comprenant l'objet constituant un point de repère à identifier, en excluant les objets constituant des points de repère non compris dans le sous-ensemble.

3. Procédé selon la revendication 1 ou 2, dans lequel le bloc d'acquisition (18) comprend, en outre, une caméra (17) et l'ensemble d'images de la scène actuelle comprend une image provenant de la caméra (17) et une image provenant du bloc de télédétection (13),
- l'identification de l'objet constituant un point de repère (50) est accomplie sur l'image provenant de la caméra (17) ; et
- une projection de l'image provenant du bloc de télédétection (13) dans le système de référence de l'image vidéo est accomplie afin de mettre en coïncidence la représentation de l'objet constituant un point de repère (50) identifié sur les deux images ;
- la détermination de la direction et de la distance, par rapport à la machine (1), de l'objet constituant un point de repère (50) identifié est accomplie sur la base de la représentation mise en coïncidence de l'objet identifié sur l'image provenant du bloc de télédétection (13).

4. Procédé selon l'une quelconque des revendications précédentes, dans lequel la machine (1) est une machine ferroviaire et lesdits objets constituant des points de repère (50) comprennent des objets parmi : des codes 2D, des quais de gare, des panneaux de signalisation, des barrières anti-inondation, des figures géométriques, des signaux.

5. Procédé selon l'une quelconque des revendications précédentes, dans lequel les objets constituant des points de repère (50) comprennent des objets ayant chacun une forme géométrique respective associée, la base de données contenant une correspondance entre la forme géométrique et un numéro respectif, le procédé comprenant les étapes suivantes :
- identifier des objets à forme géométrique le long du chemin (21, 22) ;
- déduire un code de série composé des numéros successifs correspondant aux objets à forme géométrique successifs identifiés ;
- la base de données (11) stockant des codes de série en association avec les coordonnées géographiques 3D d'au moins un des objets à forme géométrique successifs donnant lieu au code de série, extraire de la base de données (11), à partir dudit code de série déduit, les coordonnées géographiques 3D d'au moins un des objets à forme géométrique successifs associés au code de série déduit ;
- la détermination de l'emplacement 3D actuel de la machine (1) se faisant en fonction des direction et distance déterminées de l'au moins un objet à forme géométrique par rapport à la machine et des coordonnées géographiques 3D extraites.

6. Procédé selon l'une quelconque des revendications précédentes, comprenant les étapes suivantes :
- calculer un emplacement actuel estimé de la machine (1) sur la base d'un emplacement 3D déterminé à l'étape d à un emplacement précédent et d'une estimation d'un déplacement de la machine entre l'emplacement précédent et l'emplacement actuel ;
- comparer l'emplacement 3D actuel déterminé par l'étape d avec l'emplacement actuel estimé calculé ;
- évaluer si le bloc de télédétection (13) est fiable sur la base de ladite comparaison afin de déterminer si le capteur de télédétection fonctionne correctement.

7. Procédé selon l'une quelconque des revendications précédentes, dans lequel l'objet constituant un point de repère (50) identifié est un signal de circulation, et au moins une des étapes suivantes est accomplie :
- l'identification dudit signal de circulation déclenche la transmission d'une instruction à un bloc de lecture de signaux embarqué (15) pour qu'il lise l'aspect actuel du signal ;
- la base de données (11) contenant, en association avec le signal de circulation, les aspects alternatifs du signal de circulation, l'aspect actuel du signal détecté par un bloc de lecture de signaux embarqué (15) est comparé avec lesdits aspects alternatifs du signal identifié tels qu'enregistrés dans la base de données ; et l'aspect actuel détecté est éliminé en fonction d'une comparaison de l'aspect actuel détecté avec lesdits aspects possibles.

8. Programme informatique adapté pour être enregistré dans la mémoire d'un dispositif électronique de traitement de données (10) et comprenant, en outre, un micro-ordinateur, ledit programme informatique comprenant des instructions qui, lorsqu'elles sont exécutées sur le micro-ordinateur, entraînent l'accomplissement des étapes d'un procédé selon l'une des revendications précédentes.

9. Dispositif de traitement de données (10) destiné à être placé à bord d'une machine (1) adaptée pour se déplacer sur au moins un chemin prédéterminé (21, 22) ; ledit dispositif de traitement de données comprenant :
une base de données (11) dans laquelle sont enregistrées des données de définition d'objets constituant des points de repère le long du chemin prédéterminé, les données de définition de chaque objet constituant un point de repère étant associées à ses coordonnées géographiques 3D ;
un bloc d'acquisition (18) fournissant des images de la scène devant la machine (1), ledit bloc d'acquisition comprenant au moins un bloc de télédétection (13) adapté pour émettre des ondes en direction du chemin s'étendant devant la machine, à recevoir des échos des ondes émises provenant d'au moins un objet réfléchissant, à créer une image à partir des échos reçus et à calculer, à partir desdites ondes et desdits échos, une direction et une distance, par rapport à la machine, dudit objet réfléchissant ;
dans lequel :
le bloc d'acquisition (18) est adapté pour acquérir un ensemble d'images de la scène actuelle comprenant au moins une image provenant du bloc de télédétection (13) ;
le dispositif de traitement de données étant adapté pour identifier sur ladite image un objet constituant un point de repère (50) en fonction de données de définition d'objets constituant des points de repère dans la base de données (11) et, à l'aide de l'image provenant du bloc de télédétection (13), à déterminer une direction et une distance, par rapport à la machine (1), de l'objet constituant un point de repère identifié ;
le dispositif de traitement de données étant propre, en outre, à déterminer l'emplacement 3D actuel de la machine (1) en fonction desdites direction et distance déterminées par rapport à la machine et des coordonnées géographiques 3D associées à l'objet constituant un point de repère identifié dans la base de données (11).

10. Dispositif de traitement de données (10) selon la revendication 9, propre, sur la base d'un emplacement estimé de manière approximative de la machine (1) et pour identifier sur ladite image un objet constituant un point de repère (50) en fonction de données de définition d'objets constituant des points de repère dans la base de données (11), à déterminer, parmi les objets constituant des points de repère (50) définis dans la base de données (11), un sous-ensemble des objets constituant des points de repère situés au plus à une distance seuil dudit emplacement estimé de manière approximative de la machine (1) ;
l'identification d'un objet constituant un point de repère (50) étant accomplie par le dispositif de traitement de données (10) en considérant uniquement le sous-ensemble déterminé comme comprenant l'objet constituant un point de repère à identifier, en excluant les objets constituant des points de repère non compris dans le sous-ensemble.
